# EUROPÄISCHE PATENTANMELDUNG

(11) **EP 0 895 718 A2**
(43) Veröffentlichungstag der Anmeldung: **10.02.1999**
(21) Anmeldenummer: 98113776.3
(22) Anmeldetag: 23.07.1998
(51) Int. Cl.: A01N 43/80, A01N 25/26, A01N 25/10

(54) **Zusammensetzung umfassend einen Komplex von Cyclodextrin mit Isothiazolinon in einer wasserlöslichen Hülle und Dessen Verwendung**

(30) Priorität: 07.08.1997 DE 19734244
(71) Anmelder: Wacker-Chemie GmbH, 81737 München (DE)
(72) Erfinder: Wimmer, Thomas, Dr., 84533 Martkl (DE); Tiedtke, Gerhard, 60388 Frankfurt a Main (DE)
(74) Vertreter: Potten, Holger

(57) **Zusammenfassung**

Die Erfindung betrifft eine Zusammensetzung, umfassend einen Komplex von Cyclodextrin mit Isothiazolinon in einer wasserlöslichen, staubdichten Hülle.

## Beschreibung

Die Erfindung betrifft eine Zusammensetzung umfassend einen Komplex von Cyclodextrin (CD) mit Isothiazolinon in einer was serlöslichen Hülle und dessen Verwendung als Konservierungsmittel.

Produkte mit einer wäßrigen Phase können durch mikrobielle Einflüsse zu Geruchsbildung, Verfärbungen, Gasbildung oder Konsistenzänderung neigen. Durch den Einsatz von Konservierungsmitteln können diese unerwünschten Einflüsse verhindert, verlangsamt oder reduziert werden.

Isothiazolinone sind bekannte, wirksame Konservierungsmittel. Sie sind als wäßrige Lösungen und Formulierungen mit unterschiedlichen Konzentrationen kommerziell erhältlich, z.B. unter dem Markennamen Kathon® der Fa. Rohm and Haas. Eine Mischung im Mengenverhältnis 3:1 von 5-Chlor-2-methyl-4-isothiazolin-3-on und 2-Methyl-4-isothiazolin-3-on ist z.B. als Kathon® CG als 1,5%-ige Lösung oder als 14%-ige Lösung (Kathon® LX) im Handel erhältlich.

Isothiazolinone werden in weiten Bereichen z.B. zur Konservierung von wasserhaltigen Produkten und zur Wasserbehandlung in Kreislaufsystemen, wie z.B. Kühltürmen, verwendet.

Cyclodextrine sind cyclische Oligosaccharide, die aus 6,7 oder 8 α(1-4)-verknüpften Anhydroglukoseeinheiten aufgebaut sind. Die durch enzymatische Stärkekonversion hergestellten α-, β- oder γ-Cyclodextrine unterscheiden sich in dem Durchmesser ihrer hydrophoben Kavität und eignen sich generell zum Einschluß zahlreicher lipophiler Substanzen.

Komplexe von Cyclodextrinen mit Isothiazolinonen sind aus der Literatur bekannt.

So wird in CA: 100: 156595 ein β-Cyclodextrin-Komplex des schwerlöslichen Biozids 2-N-Octyl-4-isothiazolin-3-on beschrieben.

In DE 4313408 ist die Erhöhung der Wasserlöslichkeit von Bioziden mit einer maximalen Löslichkeit von 0,15 g/l in Wasser durch Einlagerung in Cyclodextrine beschrieben. Auch ist die Verwendung dieser Systeme zur Konservierung von wäßrigen Systemen aufgezeigt. Eine Angabe über die tatsächlich erreichten Biozid-Konzentrationen ist nicht offenbart.

Aus CA:120:71552p ist die Komplexierung von Isothiazolinonen mit β-CD bekannt. Für den Komplex des 4,5-Dichlor-2-N-octyl-4-isothiazolin-3-on mit β-CD wurde eine reduzierte Hautreizung gefunden. Die Herstellung eines festen Komplexes von β-Cyclodextrin mit 5-Chlor-2-methyl-4-isothiazolin-3-on und 2-Methyl-4-isothiazolin-3-on und deren Verwendung als Bakterizid, Fungizid und Schleimbekämpfungsmittel ist beschrieben. Nachteile des offenbarten festen Komplexes sind die mögliche Staubentwicklung und die dadurch erfolgende Exposition von Haut und Lunge mit dem giftigen und ätzenden Wirkstoff.

In der US-Patentschrift US 5559083 wird eine Mischung aus Isothiazolinonen und verzweigten Cyclodextrinen ("branched CDs") zur Stabilisierung des Wirkstoffs in wäßriger Lösung vorgeschlagen. Nachteil der offenbarten flüssigen Formulierung ist die Gefahr des Verschüttens oder Verspritzens des Wirkstoffkonzentrats. Ferner muß für jede Anwendung ein bestimmtes Volumen abgemessen werden.

Bei beiden bekannten Darreichungsformen besteht damit die Gefahr einer Kontamination von Menschen bei unsachgemäßem Verbrauch.

Aufgabe der Erfindung ist es, eine feste, leicht zu dosierende, staubfreie und somit für den Menschen ungefährliche Formulierung von Isothiazolinonen zur Verfügung zu stellen.

Die Aufgabe wird gelöst durch eine Zusammensetzung gemäß Anspruch 1.

Das Isothiazolinon ist vorzugsweise ausgewählt aus der Gruppe 5-Chlor-2-methyl-4-isothiazolin-3-on, 2-Methyl-4-isothiazolin-3-on und deren Gemisch.

Vorzugsweise enthält die erfindungsgemäße Zusammensetzung im Isothiazolinon/Cyclodextrin Komplex 5-Chlor-2-methyl-4-isothiazolin-3-on in einer Menge von 2 - 10% (w/w), besonders bevorzugt 6-10% (w/w) bezogen auf das Gesamtgewicht des Komplexes.

Vorzugsweise enthält die erfindungsgemäße Zusammensetzung im Isothiazolinon/Cyclodextrin Komplex 2-Methyl-4-isothiazolin-3-on in einer Menge von 0,1 - 3% (w/w), besonders bevorzugt 0,5 - 1,5% (w/w) bezogen auf das Gesamtgewicht des Komplexes.

Vorzugsweise enthält die erfindungsgemäße Zusammensetzung im Isothiazolinon/Cyclodextrin Komplex ein Cyclodextrin ausgewählt aus der Gruppe β-CD, γ-CD und deren Gemische. Insbesondere bevorzugt ist β-CD.

Die in der erfindungsgemäßen Zusammensetzung vorhandenen Isothiazolinon/Cyclodextrin-Komplexe werden bei Verwendung von β-Cyclodextrin nach bekanntem Verfahren (z.B. wie in CA:120:71552p beschrieben) hergestellt. Die Herstellung kann jedoch auch beispielsweise wie in Beispiel 1 der vorliegenden Anmeldung beschrieben erfolgen. Entsprechende Komplexe von Isothiazolinon mit γ-CD können beispielsweise wie in Beispiel 3 der vorliegenden Anmeldung beschrieben hergestellt werden.

Als Isothiazolinon ist vorzugsweise ein Gemisch aus 5-Chlor-2-methyl-4-isothiazolin-3-on und 2-Methyl-4-isothiazolin-3-on in der erfindungsgemäßen Zusammensetzung vorhanden.

Für die Herstellung der in der erfindungsgemäßen Zusammensetzung vorhandenen Isothiazolinon/Cyclodextrin-Komplexe besonders geeignet sind β-CD, γ-CD oder deren Gemisch, insbesondere geeignet ist β-CD.

Die wasserlösliche, staubdichte Hülle besteht aus beliebigen staubdichten wasserlöslichen Materialien. Vorzugsweise eignen sich Beutel aus einer Folie aus wasserlöslichem Material oder Gelatine-Kapseln.

Besonders geeignet sind Beutel aus einer Folie aus wasserlöslichem Polyvinylalkohol.

Der Komplex aus Isothiazolinonen und Cyclodextrinen wird vorzugsweise in der für die jeweilige Anwendung benötigten Menge oder einer definierten Menge, die eine einfache Dosierung der erfindungsgemäßen Zusammensetzung ermöglicht, in eine wasserlösliche, staubdichte Hülle verpackt. Die Verpackung erfolgt dergestalt, daß der Isothiazolinon/Cyclodextrin-Komplex nicht aus der verschlossenen, unversehrten Verpackung entweichen kann.

Die Erfindung betrifft somit auch ein Verfahren zur Herstellung der erfindungsgemäßen Zusammensetzung, das dadurch gekennzeichnet ist, daß ein in an sich bekannter Art und Weise hergestellter Isothiazolinon/Cyclodextrin-Komplex in einer definierten Menge in einer wasserlöslichen, staubdichten Hülle verpackt wird.

Vor der Verpackung in eine wasserlösliche, staubdichte Hülle können die Cyclodextrin-Komplexe bei Bedarf in bekannter Weise gesiebt, gesichtet, gemahlen, tablettiert, granuliert oder kompaktiert werden.

Die erfindungsgemäße Zusammensetzung eignet sich vorzugsweise als Konservierungsmittel. Die Erfindung betrifft somit auch die Verwendung der erfindungsgemäßen Zusammensetzung als Konservierungsmittel sowie Konservierungsmittel enthaltend die erfindungsgemäße Zusammensetzung.

Die erfindungsgemäße Zusammensetzung kann beispielsweise zur Konservierung von z.B. Farben, Lacken, Klebstoffen, wäßrigen Emulsionen oder Dispersionen, Kühlschmierstoffen, wäßrigen Wasch- und Reinigungsbädern, Lack-Koagulierbädern, Kühlwässern, kosmetischen Produkten, Wasser in Klimaanlagen oder zur Schleimbekämpfung in Wasserkreisläufen der Papier- und Pulpeindustrie verwendet werden. Dazu wird die erfindungsgemäße Zusammensetzung dem zu konservierenden Material zugesetzt. Die Erfindung betrifft somit auch ein Verfahren zur Konservierung von Produkten mit wäßriger Phase, das dadurch gekennzeichnet ist, daß eine erfindungsgemäße Zusammensetzung dem jeweiligen Produkt mit wäßriger Phase zugesetzt wird.

Die folgenden Beispiele dienen der weiteren Erläuterung der Erfindung:

### Beispiele 1 bis 3: Herstellung der Cyclodextrin-Komplexe:

### Beispiel 1:

500 g β-Cyclodextrin (käuflich erhältlich bei der Wacker-Chemie GmbH, München, unter der Bezeichnung BETA W 7) werden mit 400 g Kathon® LX (10.3% von 5-Chlor-2-methyl-4-isothiazolin-3-on, 3,7% 2-Methyl-4-isothiazolin-3-on, Fa. Rohm and Haas) und 1000 ml Wasser unter Rühren auf 90 °C erhitzt. Nach 60 Minuten wird die Lösung unter Rühren auf Raumtemperatur abgekühlt und der entstandene Niederschlag abfiltriert, mit 80 ml Wasser gewaschen und im Trockenschrank bei 40 °C getrocknet. Die Gehaltsbestimmung der Wirkstoffe wurde mit HPLC durchgeführt.
Ausbeute: 275 g eines leicht gelben Feststoffes mit einem Gehalt von 8,5% 5-Chlor-2-methyl-4-isothiazolin-3-on und 0,86% 2-Methyl-4-isothiazolin-3-on.

### Beispiel 2:

25 g β-Cyclodextrin (Wacker-Chemie GmbH) werden mit 20 g Kathon® LX in 1000 ml Wasser gelöst. Die Lösung wird lyophylisiert. Die Gehaltsbestimmung der Wirkstoffe wurde mit HPLC durchgeführt.
Ausbeute: 29 g eines lockeren Pulvers mit einem Gehalt von 6,3% 5-Chlor-2-methyl-4-isothiazolin-3-on und 0,92% 2-Methyl-4-isothiazolin-3-on.

### Beispiel 3:

287 g γ-Cyclodextrin (10% Feuchte, Wacker-Chemie GmbH "GAMMA W8") werden zusammen mit 500 ml Wasser und 200 g Kathon® LX auf 80 °C erwärmt. Die Mischung wird nach 45 Minuten unter Rühren auf 10 °C abgekühlt und der Niederschlag abfiltriert. Der isolierte Cyclodextrin-Komplex wird im Exsikkator über Phosphorpentoxid getrocknet. Die Gehaltsbestimmung der Wirkstoffe wurde mit HPLC durchgeführt.
Ausbeute: 311 g eines leicht gelben Pulvers mit einem Gehalt von 7,2% 5-Chlor-2-methyl-4-isothiazolin-3-on und 2,7% 2-Methyl-4-isothiazolin-3-on.

### Beispiele 4 bis 6: Verpackung in eine wasserlösliche Hülle:

### Beispiel 4:

Aus einer wasserlöslichen Polyvinylalkohol-Folie werden zwei Stücke der Größe 30 cm x 20 cm geschnitten und deckungsgleich aufeinander gelegt. Die Folien werden an den zwei langen und an einer kurzen Seite mit einem Folienschweißgerät zusammengeschweißt. Dieser offene Beutel wird mit 100 g der Komplexverbindung aus Beispiel 1 gefüllt und an der fehlenden Seite ebenfalls verschweißt.

### Beispiel 5:

Eine Gelatine-Kapsel mit einem Füllvolumen von 100 ml wird mit 25 g des Komplexes aus Beispiel 3 gefüllt. Die Gelatinekapsel löst sich unter leichtem Rühren in 10 l Wasser innerhalb 45 Minuten vollständig auf.

### Beispiel 6:

Durch Vermischen von 3000 g eines vollsynthetischen Kühlschmierstoff-Konzentrats (EMOL-O-Grind 1195/1, Fa. May Lubrication) mit 100 l VE-Wasser wurde in einem Rührkessel eine Kühlschmierstoffemulsion hergestellt. Unter leichtem Rühren wurde ein flacher Polyvinylalkoholbeutel der Größe 15 cm x 10 cm, gefüllt mit 35 g des Komplexes aus Beispiel 1 zur Kühlschmierstoffemulsion gegeben. Der Beutel war nach ca. 5 Minuten vollständig aufgelöst.
Der Gehalt an 5-Chlor-2-methyl-4-isothiazolin-3-on wurde in zeitlichen Abständen mit HPLC gemessen. Die Ergebnisse sind in folgender Tabelle zusammengefaßt.

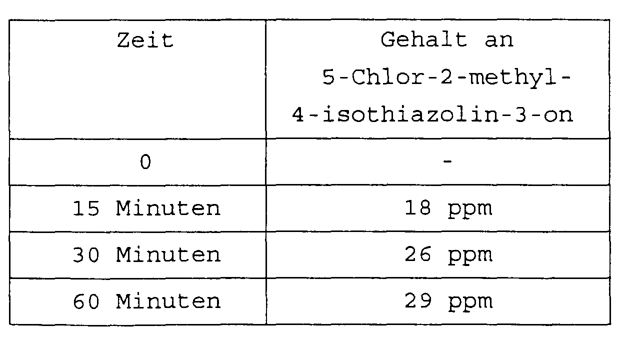

Die erhaltene Kühlschmierstoffemulsion zeigte eine ausgezeichnete Beständigkeit gegen mikrobiellen Befall.

## Patentansprüche

1. Zusammensetzung umfassend einen Komplex von Cyclodextrin mit Isothiazolinon in einer wasserlöslichen staubdichten Hülle.

2. Zusammensetzung gemäß Anspruch 1, dadurch gekennzeichnet, daß das Isothiazolinon ausgewählt ist aus der Gruppe 5-Chlor-2-methyl-4-isothiazolin-3-on, 2-Methyl-4-isothiazolin-3-on und deren Gemische.

3. Zusammensetzung gemäß Anspruch 1, dadurch gekennzeichnet, daß der Komplex von Cyclodextrin mit Isothiazolinon 5-Chlor-2-methyl-4-isothiazolin-3-on in einer Menge von 2 - 10% (w/w) enthält.

4. Zusammensetzung gemäß Anspruch 1 oder 3, dadurch gekennzeichnet, daß der Komplex von Cyclodextrin mit Isothiazolinon 2-Methyl-4-isothiazolin 3-on in einer Menge von 0,1 - 3% (w/w) enthält.

5. Zusammensetzung gemäß einem oder mehreren der Ansprüche 1 bis 4, dadurch gekennzeichnet, daß das Cyclodextrin ausgewählt ist aus der Gruppe β-CD, γ-CD und deren Gemischen.

6. Zusammensetzung gemäß einem oder mehreren der Ansprüche 1 bis 5, dadurch gekennzeichnet, daß die wasserlösliche, staubdichte Hülle aus einer Folie aus wasserlöslichem Material oder Gelatine-Kapseln besteht.

7. Verfahren zur Herstellung einer Zusammensetzung gemäß einem der Ansprüche 1 bis 6, dadurch gekennzeichnet, daß ein in an sich bekannter Art und Weise hergestellter Isothiazolinon/Cyclodextrin-Komplex in einer definierten Menge in einer wasserlöslichen, staubdichten Hülle verpackt wird.

8. Verfahren zum Konservierung von Produkten mit wäßriger Phase, das dadurch gekennzeichnet ist, daß eine erfindungsgemäße Zusammensetzung gemäß einem oder mehreren der Ansprüche 1 bis 6 dem jeweiligen Produkt mit wäßriger Phase zugesetzt wird.

9. Verwendung einer Zusammensetzung gemäß einem der Ansprüche 1 bis 6 als Konservierungsmittel.

10. Konservierungsmittel enthaltend eine Zusammensetzung gemäß einem oder mehreren der Ansprüche 1 bis 6.
